# EUROPEAN PATENT SPECIFICATION

(11) **EP 0 538 378 B1**
(45) Date of publication and mention of the grant of the patent: **05.04.1995**
(21) Application number: 91913474.2
(22) Date of filing: 09.07.1991
(51) Int. Cl.: B01D 1/18, B05B 3/10, F26B 5/08

(54) **ATOMIZER WHEEL**
ZERSTÄUBERRAD
ROUE DE PULVERISATION

(30) Priority: 10.07.1990 DK 1658/90; 01.11.1990 DK 2625/90
(43) Date of publication of application: 28.04.1993
(73) Proprietor: APV Anhydro A/S (APV Pasilac A/S), 2860 Soborg (DK)
(72) Inventor: HEIDE, Morten, DK-2500 Valby (DK); SONDERBY, Henrik, DK-3000 Helsing r (DK)
(74) Representative: Jeppesen, Finn Heiden
(86) International application number: DK9100198
(87) International publication number: WO9200788

(56) References cited:
- EP-A- 0 035 344
- EP-A- 0 375 236
- DE-C- 2 351 491
- DK-B- 117 820
- DK-B- 132 161
- DK-B- 143 154
- DK-B- 145 794
- DK-B- 150 717
- DK-B- 151 198

## Description

The invention concerns an atomizer wheel for atomizing in particular abrasive liquids, such as suspensions or dispersions of abrasive materials, in an atomizer drying system, said wheel comprising a central hub for securing the wheel on a rotatable shaft in a centrifugal atomizer associated with the atomizer drying system, a ring-shaped acceleration chamber arranged around said hub and having an upper ring opening through which the liquid to be atomized can be added to the acceleration chamber, one or more throw-out faces for moving the liquid outwardly in the atomizer wheel in a direction toward its periphery, and a plurality of throw-out channels which, distributed with a mutual angular distance along the periphery of the acceleration chamber, extend transversely out through the outer wall of the chamber and serve to throw the liquid out of the acceleration chamber during rotation of the atomizer wheel whereby at least one of the throw-out faces is provided on a separate preferably plate-shaped wear ring, which is arranged on the atomizer wheel and consists of e.g. a ceramic material, such as SiC or A1₂O₃ or a similar hard and wear resistant material. Such a atomizer wheel is know from DK-B-117820.

Atomizer wheels of the above-mentioned type are used for processes where a product is to be dried in atomized state. To achieve efficient atomization in this connection, the atomizer wheel must necessarily rotate very rapidly, and it is thus quite ordinary that the velocity of such wheels at the periphery is up to 225 m/sec. and above. These very high velocities entail that when passing the wheel the product tends to wear relatively rapidly in particular the areas which are present adjacent to the throw-out channels on the throw-out face. Of course the rate at which this wear takes place varies much from one product to the other, but is in particular extraordinarily great when suspensions or dispersions of abrasive materials, such as quartz particles or flour, are atomized. The atomizer wheel must therefore be exchanged frequently in these cases, involving great costs, and so far it has not been possible to remedy the above-mentioned wear problems satisfactorily in spite of sustained efforts of finding sufficiently hard-wearing materials for the production of the wheels.

The object of the invention is therefore to provide an atomizer wheel of the type stated in the opening paragraph, which when worn down can be renovated rapidly and inexpensively.

This is achieved in that the atomizer wheel of the invention is characterized in that the plate-shaped wear ring is cut through substantially transversely to the peripheral direction of the ring by at least one cut. The throw-out face, which is particularly liable to be worn down by the product to be atomized, is in this way given the excellent good wear resistance of the said materials, without the materials, in spite of their poor or absent elongation at break, are burst by the very huge centrifugal forces acting during the rotation.

In a particularly advantageous embodiment of the atomizer wheel of the invention, the wear ring is divided into a plurality of wear elements by cuts extending from the periphery of the ring substantially in a direction directed toward the same point on the axis of rotation or an essentially circular area around said axis, so that the radial extent of each wear element is moreover greater than its greatest width. This effectively protects the wear resistant material against being burst during the rotation of the atomizer wheel.

Futher, according to the invention, to avoid obstacles that might impede the flow of the liquid film across the throw-out face, the cut or cuts may extend obliquely forwardly in the direction of rotation from the throw-out face of the ring.

Moreover, according to the invention, to support the wear ring during rotation, the atomizer wheel may have a support face acting against the rear side of the ring and an inwardly directed face acting against the outer peripheral edge of the ring. This entails that the wear elements will only be affected by pressure loads during the rotation, and that they can be replaced easily and rapidly when worn down.

Further, according to the invention, the elements of the wear ring may be loosely arranged in the atomizer wheel, so that the elements automatically assume a correct position in the atomizer wheel during the rotation, without simultaneously being affected by tensile or bending stresses, or the position may be fixed already beforehand, the elements of the wear ring being alternatively kept biassed at any rate at normal room temperature in a direction toward the support face and/or the inwardly facing rim by a clamping means.

Moreover, according to the invention, to secure the positions of the wear elements during e.g. start and stop, the rear side of the cut wear ring may be formed with at least one radially extending groove which cooperates with a tongue or pin secured in the support face on the atomizer wheel acting against the rear side.

In an advantageous embodiment of the invention, the atomizer wheel may comprise a downwardly and/or inwardly facing wear ring arranged outside the acceleration chamber and having a throw-out face to throw the liquid in a substantially coherent liquid film from the throw-out channels further out for atomization from a peripherally arranged discharge edge on the throw-out face, said face extending inwardly from the discharge edge to an area on the atomizer wheel positioned over the mouths of the throw-out channels.

Furthermore, according to the invention, the inwardly directed face acting against the outer peripheral edge of the wear ring may be provided with an inwardly facing rim which engages with an annular substantially V-shaped cut out, which is provided in the outer peripheral edge of the wear ring and intersects the throw-out face along the discharge edge, said edge being provided at a distance below the lower edge of the rim so that the atomized liquid can freely leave the atomizer wheel via the discharge edge.

Further, in another advantageous embodiment of the invention, the atomizer wheel may comprise a cut wear ring arranged in the acceleration chamber and having a throw-out face facing the upper ring opening, and the inwardly directed face acting against the outer peripheral edge of the ring may be arranged on the inner side of the outer wall of the acceleration chamber, the throw-out face of the wear ring extending substantially from the central hub of the wheel to the inwardly facing end of the throw-out channels.

Finally, according to the invention, the cut wear ring may be composed of a base consisting of a corrosion resistant material, such as stainless steel, and a wear layer applied on the base, said wear layer forming the throw-out face and consisting of an extra hard and wear resistant material, such as silicon carbide, aluminium oxide or tungsten carbide. The wear elements will hereby be particularly inexpensive to produce, while obtaining very great safety against bursts.

The invention will be explained more fully by the following description of an embodiment of the atomizer wheel, which just serves as an example, with reference to the drawing, in which
fig. 1 shows, partially in axial section, a first embodiment of an atomizer wheel according to the invention mounted on a centrifugal atomizer, of which only the lower part is visible,
fig. 2 is an enlarged view of a fragment of the atomizer wheel shown in fig. 1,
fig. 3 is an enlarged view of a fragment of a second embodiment of an atomizer wheel according to the invention,
fig. 4 is a perspective view of a wear ring cut into elements,
fig. 5 shows a fragment of a circular section through the wear ring shown in fig. 4,
fig. 6 is a radial section through a second embodiment of a wear ring,
fig. 7 is a third embodiment of an atomizer wheel according to the invention, and
fig. 8 is a top view of the wear ring associated with the atomizer wheel shown in fig. 7.

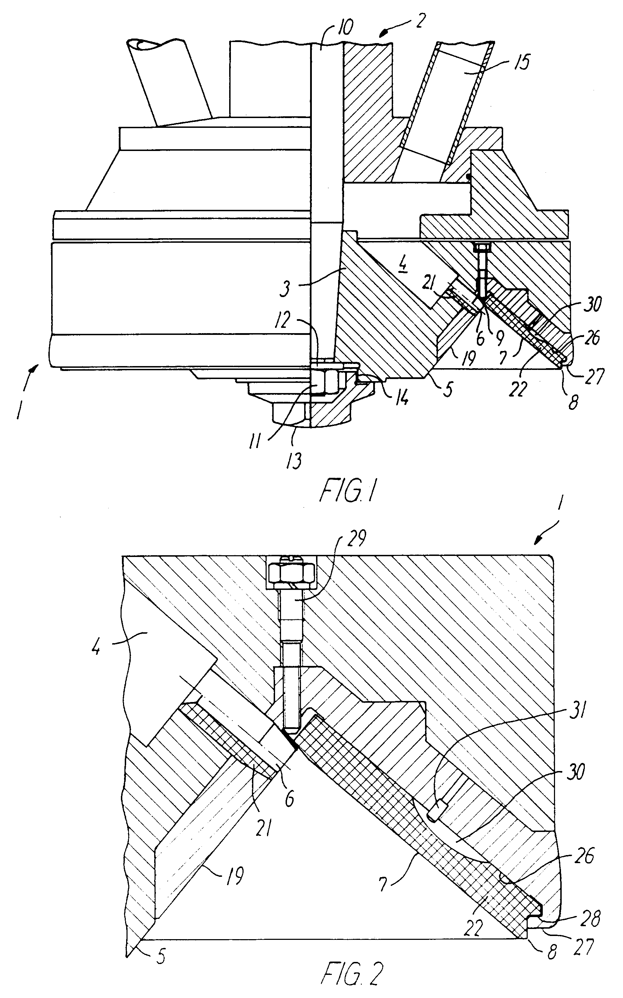

In fig. 1, a first embodiment of the atomizer wheel is generally designated 1 and the centrifugal atomizer is designated 2. The atomiser wheel 1 substantially comprises a central hub 3, an acceleration chamber 4 defined by a wall 5 having a plurality of throw-out channels 6 evenly distributed along the periphery of the chamber, and a throw-out face 7 which has a discharge edge 8 and extends inwardly from this to an area 9 on the atomizer wheel 1 disposed above the throw-out channels 6. The central hub 3 of the atomizer wheel is screwed on to the shaft 10 of the centrifugal atomizer 2 by means of a nut 11 and an end washer 12. This threaded assembly is moreover protected behind a cover nut 13, which is screwed downwardly into the atomizer wheel with external threads 14.

When the system works, the shaft 10 and thereby the atomizer wheel 1 rotate with a very great velocity, so that the liquid added to the acceleration chamber via feed pipes 15 will be affected by great centrifugal forces pressing the liquid out through the throw-out channels 6 in jets impinging on the throw-out face 7 with a considerable force, whereupon the liquid is immediately distributed in a coherent product film which is thrown further out by the centrifugal force towards the discharge edge 8 of the throw-out face 7, from which the liquid then leaves the wheel in atomized state because of the great velocity.

The centrifugal forces subject the atomizer wheel to very great mechanical impacts, and atomizer wheels of this type are therefore generally made of a strong stainless steel alloy. There is risk of condensate depositions on the faces of the atomizer wheel in the area outside the throw-out channels 6, since the relatively cold liquid flowing out of the throw-out channels causes the temperature at this point to be at a lower level than in the rest of the space surrounding the atomizer wheel. When working with highly corrosive liquids, the said faces may therefore, as is the case in the shown example, be protected by a special corrosion insert 19, which may e.g. be made of nickel alloys or titanium.

When abrasive liquids are atomized, such as suspensions or dispersions of abrasive materials, e.g. quartz particles or flour, in particular the throw-out channels and the throw-out face are subjected to very great wear, entailing that the wheels just have a short life when using conventional constructions. This drawback is remedied in the atomizer wheel of the invention by lining each throw-out channel 6 with a wear insert 21 of a particularly wear resistant material and providing the throw-out face 7 on a wear ring 22 of the same or another wear resistant material.

This material may e.g. be silicon carbide or aluminium oxide, both of which are materials which have a very great wear resistance, but which on the other hand almost completely lack elongation at break so that the materials are incapable of absorbing tensile stresses.

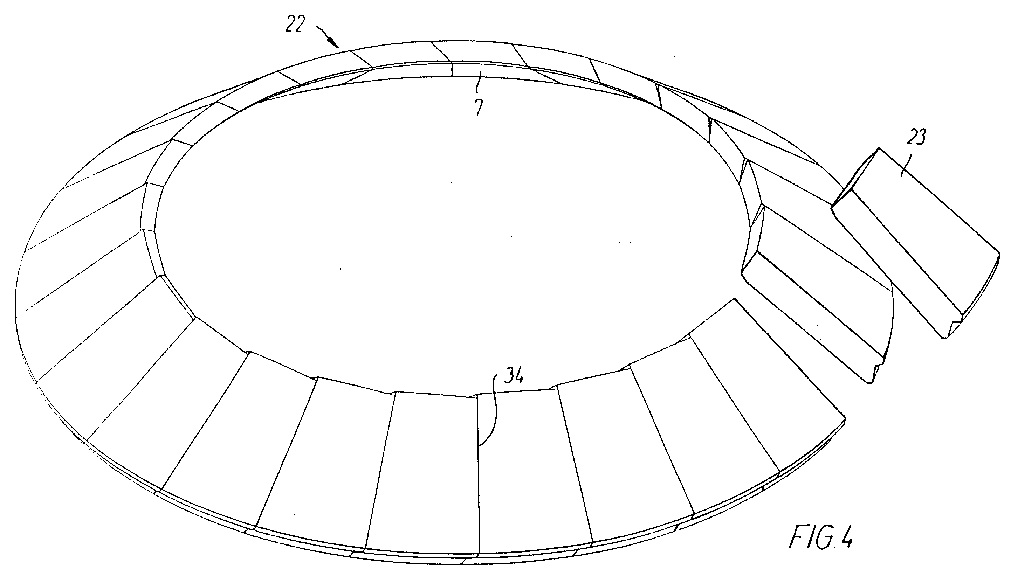

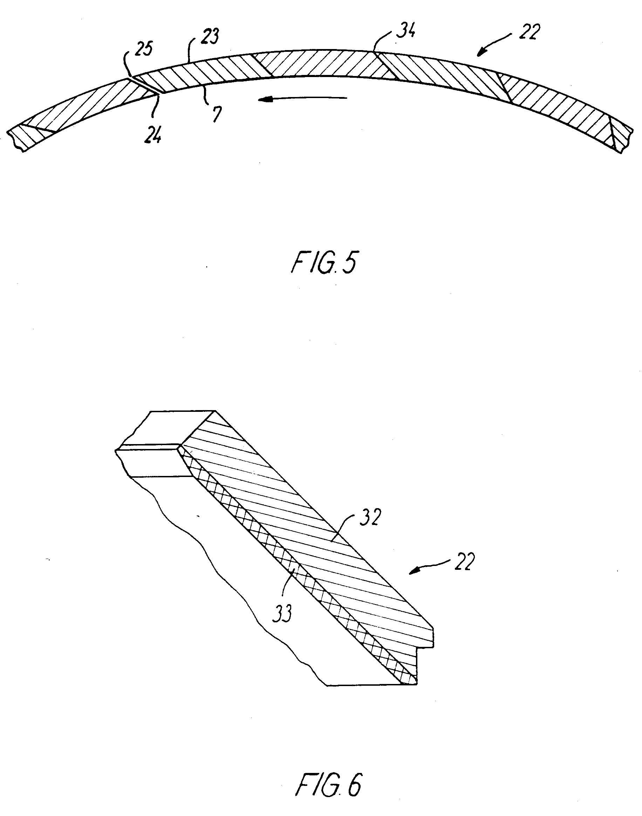

This entails that the wear ring 22 will rapidly be burst by the centrifugal forces, and, as shown in figs. 4 and 5, it is therefore divided in advance into a plurality of wear elements 23 by cuts 34 made through the ring transversely to its peripheral direction. In the shown example, these cuts are made with equidistant angular distances in the ring and extend from its periphery toward a common point on the axis of rotation, so that the ring is divided into uniform wear elements 23. To avoid occurrence of tensile stresses in the elements to the greatest possible extent, the cuts 34 in the ring are moverover laid so closely that the radial extent of each element is greater than its greatest width. As shown best in fig. 5, the cuts moreover extend obliquely forwardly in the direction of rotation, so that a type of "waternose" 24 is formed on each element above the possible gap 25 that separates two adjacent elements. This entails that the rapid liquid flow across the throw-out face 7 is not impeded by any form of obstacles at the locations where the ring has been cut through.

As shown in fig. 2, the individual wear elements 23 are positioned loosely side by side in the atomizer wheel 1 and are kept in position in the wheel during the rotation by means of the centrifugal force alone, which is absorbed partly by a support face 26 disposed behind the ring, partly by an inwardly facing rim 27 which supports the outer peripheral edge of the ring with a reaction force. This manner of support means that the elements will be affected by pressure forces alone.

The outer peripheral edge of the wear ring is formed with an annular cut-out 28 with which the wear ring rests on the rim 27. This cut-out 28 is shaped so that the discharge edge 8, which forms the line of intersection between the vertical surface of revolution of the cut-out and the throw-out face 7, will be disposed somewhat below the lower edge of the rim 27, such that the liquid can freely atomize from the discharge edge 8. During assembly, the wear elements are edged into position in the wheel and are fixed loosely in it by means of screws 29, which are screwed down toward the upper edge of the wear ring without touching it however, so that the elements are prevented from falling out when the wheel stands still.

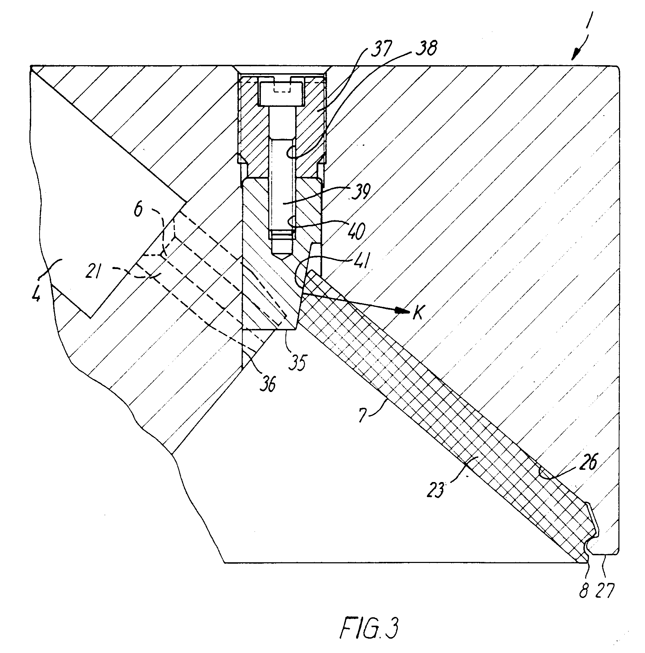

Alternatively, as shown in fig. 3, the wear elements 23 may be fixed in advance in correct positions by means of a wedge 35 associated with each element 23, said wedge serving to keep the element biassed against the support face 26 and the inwardly facing rim 27. The wedge 35 is placed in a hole 36 in which an insert screw 37 is mounted upwardly. The screw has an internal threaded hole 38 with a screw 39 which is screwed into a threaded hole 40 in the wedge 35. Tightening of the screw 39 causes the wedge 35 to be moved along an inclined face 41 provided upwardly on the element 23 with such an inclination that the resulting component of force, by which the wedge 35 acts on the element 23, is directed against the support face 26 and the rim 27, so that the element is kept securely fixed in a predetermined position.

If the element 23 is thus clamped in a cold state, i.e. before the atomizer wheel is operated, the element, which consists of a material with a smaller coefficient of expansion than the material of the wheel, will expand less than the wheel and will lie loosely in it in the same manner as described in connection with the mention of fig. 2, when the wheel in operation is heated by the materials to be atomized. Alternatively, the element may also be clamped when the element and the wheel have been warmed, are e.g. at working temperature or at a temperature between this and room temperature. In a cold state, the element will then be fixed with a suitably great bias effectively securing the position of the element under all conditions of operation. With a view to compensating the difference between the expansions of the element and the wheel upon heating, the wedge 35 may advantageously be resilient. Thus, it may downwardly have the shape of e.g. a leaf spring or be made wholly or partly of an elastomeric material.

A radially extending groove 30 is provided in the rear side of one or more wear rings, and, correspondingly, pins 31 are driven into the corrosion insert 19, engaging with the grooves 30 so that the assembled ring of elements is secured against relative rotation with respect to the atomizer wheel when the velocity of said wheel is changed at e.g. start or stop.

As shown, the wear ring is conical with a diverging conicity in downward direction, and the throw-out face of the ring is moreover adapted such as to extend in parallel with a face containing the axes of the throw-out channels. The liquid jets from the throw-out channels 6 therefore do not hit the throw-out face 7 directly, so that wear on this is minimized to the greatest extent possible.

Fig. 6 shows a radial section through a second embodiment of a wear ring for an atomizer wheel according to the invention. In this case the ring consists of a base 32, which may be made of the same material as the atomizer wheel itself or the corrosion insert 19, and a wear layer 33 which is applied to the base and may be made of the same material as the wear ring previously mentioned. The wear layer may also consist of tungsten carbide that can be sprayed on to the base 32. This structure is particularly inexpensive to manufacture and is moreover particularly burst proof.

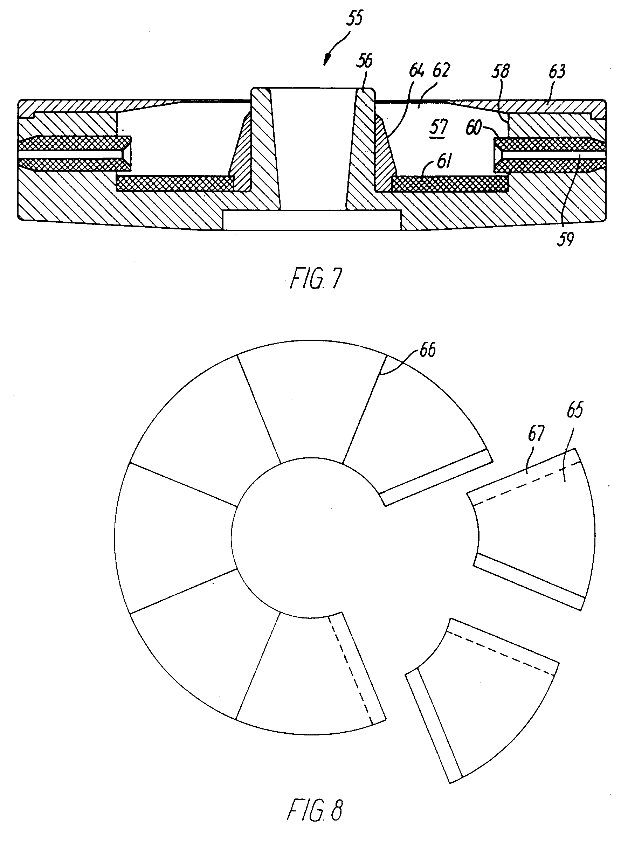

Fig. 7 shows a third embodiment of an atomizer wheel which is generally designated 55. In this case the wheel has a central hub 56, an acceleration chamber 57 defined by a wall 58 with throw-out channels 59 in wear inserts 60, and a wear ring 61 positioned in the bottom of the acceleration chamber opposite the ring opening 62, through which the liquid to be atomized is added to the acceleration chamber 57 from a centrifugal atomizer (not shown). The ring opening 62 is provided in a cover ring 63, which is secured to the wheel 55 itself by e.g. screws, and the figure moreover shows a conical ring 64 which is disposed around the hub 56 and is screwed firmly into the bottom of the acceleration chamber to secure the wear ring 61 to this together with the wear inserts 60, whose inner end is positioned immediately above the wear ring. The conical ring 64 may be made of a suitable wear resistant material and serve to protect the hub against wear by the added liquid.

In this embodiment the liquid is thrown out for atomization in the atmosphere from the throw-out channels 59, whereby the throw-out face of the wear ring is subjected to very great wear in the same manner as in the first embodiment, which reduces the life of the wheel in particular when the liquid to be atomized is abrasive, and the wear ring is therefore correspondingly made of a particularly wear resistant material, such as SiC or A1₂O₃, and, as shown in fig. 8, divided into a plurality of elements 65 by cuts 66 made in advance in the ring, which is therefore protected against being burst by the centrifugal forces.

Furthermore, the wear ring 61, which is plane in the shown embodiment, is adapted in a manner similar to the wear ring 22 described in connection with the first embodiment and operates in principle in the same manner. Thus, the wear ring 61 has "waternoses" 67 like the "waternoses" 24 of the wear ring 22 for unobstructed liquid flow passage from one element to the next during the throw-out of the liquid.

When the atomizer wheel rotates, the centrifugal forces drive the elements 65 of the wear ring out toward the inner side of the chamber wall 58, which simultaneously expands somewhat elastically so that the elements are moved axially to and fro when the wheel rotates and is stopped again.

Exemplary embodiments of the atomizer wheel of the invention have been described above. However, the structures may be varied in many ways within the scope of the invention. Thus, instead of being conical or plane, the wear ring may have a shape of double curvature, and the arrangement may moreover be used for any forms of atomizer wheels. Thus, a combination of the first and the second embodiment is readily conceivable within the scope of the invention, where a wear plate according to the invention is provided in the acceleration chamber as well as outside it. Nor do the cuts have to extend along the radii of the ring, as shown e.g. in fig. 8, but may extend in any other suitable manner, provided that the ring is cut through from the outer to the inner periphery.

In all cases, an atomizer wheel, which is constructed like the structure according to the invention, will have a longer service length and a longer life than known before, and to this should be added that the actual wheel can still be used after the wear ring has been worn down, since the wheel is fully operational again after mounting of a new wear ring. These properties are particularly advantageous when the products to be atomized are abrasive.

## Claims

1. An atomizer wheel (1,55) for atomizing in particular abrasive liquids, such as suspensions or dispersions of abrasive materials, in an atomizer drying system, said wheel comprising a central hub (3,56) for securing the wheel on a rotatable shaft (10) in a centrifugal atomizer (2) associated with the atomizer drying system, a ring-shaped acceleration chamber (4,57) arranged around the hub and having an upper ring opening (15,62) through which the liquid to be atomized may be added to the acceleration chamber (4,57), one or more throw-out faces (7) for passing the liquid outwardly in the atomizer wheel in a direction toward its periphery, and a plurality of throw-out channels (6,59) which, distributed with a mutual angular distance along the periphery of the acceleration chamber, extend transversely out through the outer wall (5,58) of the chamber and serve to throw the liquid out of the acceleration chamber (4,57) during the rotation of the atomizer wheel (1,55), whereby at least one of the throw-out faces (7) is provided on a separate preferably plate-shaped wear ring (22,61) which is provided on the atomizer wheel (1,55) and consists of e.g. a ceramic material, such as SiC or A1₂O₃ or a similar hard and wear resistant material, characterized in that the plate-shaped wear ring (22,61) is cut through substantially transversely to the peripheral direction of the ring by at least one cut (34,66).

2. An atomizer wheel according to claim 1, **characterized** in that the wear ring (22,61) is divided into a plurality of wear elements (23,65) by cuts (34,66) extending from the periphery of the ring (22,61) substantially in a direction directed to the same point on the axis of rotation or a substantially circular area around said axis.

3. An atomizer wheel according to claim 2, **characterized** in that the radial extent of each wear element (23) is greater than its greatest width.

4. An atomizer wheel according to claim 1, 2 or 3, **characterized** in that the cut or cuts (34,66) extend obliquely forwardly in the direction of rotation from the throw-out face of the ring (22,61).

5. An atomizer wheel according to one or more of claims 1-4, **characterized** in that to support the wear ring (22,61) during rotation the atomizer wheel (1,55) has a support face (26) acting against the rear side of the ring (22,61) and an inwardly directed face (27,28) acting against the outer peripheral edge of the ring (22,61).

6. An atomizer wheel according to claim 5, **characterized** in that the elements (23,65) of the wear ring (22,61) are arranged loosely in the atomizer wheel (1,55).

7. An atomizer wheel according to claim 5 or 6, **characterized** in that the elements (23) of the wear ring (22) are kept biassed in a direction toward the support face (26) and/or the inwardly directed rim (27) by a clamping means (37-41).

8. An atomizer wheel according to one or more of claims 1-7, **characterized** in that the rear side of the cut-through wear ring (22) is provided with at least one radially extending groove (30) which cooperates with a pin (31) or tongue secured in the support face (26) on the atomizer wheel (1) acting against the rear side.

9. An atomizer wheel according to one or more of claims 1-8, **characterized** in that it comprises a downwardly and/or inwardly facing ring-shaped wear ring (22) arranged outside the acceleration chamber (4) and having a throw-out face (7) for throwing the liquid in a substantially coherent liquid film out of the throw-out channels (6) further out for atomization from a peripherally arranged discharge edge (8) on the throw-out face (7), said throw-out face (7) extending inwardly from the discharge edge (8) to an area on the atomizer wheel (1) positioned above the mouths of the throw-out channels (6).

10. An atomizer wheel according to claim 9, **characterized** in that the inwardly directed face acting against the outer peripheral edge of the ring is provided on an inwardly facing rim (27) which engages with an annular substantially V-shaped cut-out (28), which is provided in the outer peripheral edge of the wear ring (22) and intersects the throw-out face along the discharge edge (8), said edge being spaced below the lower edge of the rim.

11. An atomizer wheel according to one or more of claims 1-8, **characterized** in that it comprises a cut-through wear ring (61) arranged in the acceleration chamber (57) and having a throw-out face directed toward the upper ring opening.

12. An atomizer wheel according to claim 11, **characterized** in that the inwardly directed face acting against the outer peripheral edge of the ring is provided on the inner side of the outer wall (58) of the acceleration chamber (57).

13. An atomizer wheel according to claim 11 or 12, **characterized** in that the throw-out face of the wear ring (61) extends substantially from the central hub (56) of the wheel (55) to the inwardly facing end of the throw-out channels (59).

14. An atomizer wheel according to one or more of claims 1-10, **characterized** in that at least in the vicinity of the throw-out channels (59) the throw-out face extends in parallel with a face containing the axes of said channels.

15. An atomizer wheel according to one or more of claims 1-11, **characterized** in that the cut-through wear ring (22) is composed of a base (32) consisting of a corrosion resistant material, such as stainless steel, and a wear layer (33) which is applied on the substrate and forms the throw-out face, and which consists of an extra hard and wear resistant material, such as silicon carbide, aluminium oxide or tungsten carbide.

## Patentansprüche

1. Zerstäuberrad (1,55) zum Zerstäuben von insbesondere abrasiven Flüssigkeiten, wie etwa Suspensionen oder Dispersionen von abrasiven Materialien, in einem Zerstäuber-Trocknungssystem, welches Rad eine zentrale Nabe (3, 56) zur Befestigung des Rades an einer drehbaren Welle (10) in einem Zentrifugal-Zerstäuber in Verbindung mit dem Zerstäuber-Trocknungssystem, eine ringförmige Beschleunigungskammer (4,57) um die Nabe herum, die eine obere Ringöffnung (15,62) umfaßt, durch die die zu zerstäubende Flüssigkeit in die Zerstäuberkammer (4,57) eingebracht werden kann, eine oder mehrere Auswurfflächen (7) zum Hindurchführen der Flüssigkeit nach außen in dem Zerstäuberrad in Richtung von dessen Umfang und eine Anzahl von Auswurfkanälen (6,59) aufweist, die mit gegenseitigem Winkelabstand über den Umfang der Beschleunigungskammer verteilt sind, sich quer durch die Außenwand (5,58) der Kammer hindurch erstrecken und dazu dienen, die Flüssigkeit aus der Beschleunigungskammer (4,57) während der Drehung des Zerstäuberrades (1,55) auszuwerfen, wobei wenigstens eine der Auswurfflächen (7) mit einem getrennten. vorzugsweise plattenförmigen Verschleißring (22,61) versehen ist, der an dem Zerstäuberrad (1,55) vorgesehen ist und beispielsweise aus Keramikmaterialien, wie SiC oder Al₂O₃ oder einem ähnlichen harten und verschleißfesten Material besteht, dadurch **gekennzeichnet**, daß der plattenförmige Verschleißring (22,61) im wesentlichen quer zur Unifangsrichtung des Ringes mit wenigstens einem Schnitt (34,66) durchschnitten ist.

2. Zerstäuberrad nach Anspruch 1, dadurch **gekennzeichnet**, daß der Verschleißring (22,61) in eine Anzahl von Verschleißelementen (23,65) durch Schnitte (34,66) unterteilt ist, die sich vom Umfang des Ringes (22,61) im wesentlichen in Richtung zu dem selben Punkt auf der Drehachse oder einem im wesentlichen krelsförmigen Bereich um die Achse herum erstreckt.

3. Zerstäuberrad nach Anspruch 2, dadurch **gekennzeichnet**, daß die radiale Erstreckung jedes Verschleißelements (23) größer als dessen größte Breite ist.

4. Zerstäuberrad nach Anspruch 1, 2 oder 3, dadurch **gekennzeichnet**, daß der Schnitt oder die Schnitte (34,36) sich schräg nach vorwärts in Drehrichtung von der Auswurffläche des Ringes (22,61) erstrecken.

5. Zerstäuberrad nach einem oder mehreren der Ansprüche 1 bis 4, dadurch **gekennzeichnet**, daß zum Halten des Verschleißringes (22,61) während der Drehung das Zerstäuberrad (1,55) eine Trägerfläche (26) aufweist, die gegen die Rückseite des Ringes (22,61) anliegt und eine nach innen gerichtete Fläche (27,28) aufweist, die gegen die äußere Kante des Ringes (22, 61) anliegt.

6. Zerstäuberrad nach Anspruch 5, dadurch **gekennzeichnet**, daß die Elemente (23,65) des Verschleißringes (22,61) lose in dem Zerstäuberrad (1, 55) angeordnet sind.

7. Zerstäuberrad nach Anspruch 5 oder 6, dadurch **gekennzeichnet**, daß die Elemente (23) des Verschleißringes (22) in Richtung der Trägerfläche (28) und/oder des nach innen gerichteten Randes (27) durch eine Klemmeinrichtung (37-41) vorgespannt sind.

8. Zerstäuberrad nach einem oder mehreren der Ansprüche 1 bis 7, dadurch **gekennzeichnet**, daß die Rückseite des durchgeschnittenen Verschleißringes (22) mit wenigstens einer radial gerichteten Nut (22) versehen ist, die mit einem Stift (31) oder einer Zunge zusammenwirkt, die auf der Trägerfläche (26) des Zerstäuberrades (1) vorgesehen ist, die gegen die Rückseite anliegt.

9. Zerstäuberrad nach einem oder mehreren der Ansprüche 1 bis 8, dadurch **gekennzeichnet**, daß es einen nach unten und/oder innen gewandten, ringförmigen Verschleißring (22) auf der Außenseite der Beschleunigungskammer (4) und eine Auswurffläche (7) aufweist, die die Flüssigkeit in einem im wesentlichen koherenten Film aus den Auswurfkanälen (6) weiter auswirft zur Zerstäubung von einer am Umfang angeordneten Abgabekante (8) an der Auswurffläche (7), welche Auswurffläche (7) sich nach innen von der Abgabefläche (8) zu einem Bereich an dem Zerstäuberrad (1) erstreckt, der oberhalb der Öffnung des Auswurfkanals (6) liegt.

10. Zerstäuberrad nach Anspruch 9, dadurch **gekennzeichnet**, daß die nach innen gerichtete Fläche, die gegen die äußere Umfangskante des Ringes anliegt, mit einem nach innen gewandten Wulst (27) versehen ist, der mit einem ringförmigen, im wesentlichen V-förmigen Ausschnitt (28) zusammenwirkt, der in der äußeren Umfangskante des Verschleißringes (22) vorgesehen ist und die Auswurffläche entlang der Abgabekante (8) schneidet, welcher Rand im Abstand unterhalb der unteren Kante des Wulstes liegt.

11. Zerstäuberrad nach einem oder mehreren der Ansprüche 1 bis 8, dadurch **gekennzeichnet**, daß es einen durchschnittenen Verschleißring (61) umfaßt, der in der Beschleunigungskammer (57) angeordnet ist und eine Auswurffläche aufweist, die in Richtung der oberen Ringöffnung gerichtet ist.

12. Zerstäuberrad nach Anspruch 11, dadurch **gekennzeichnet**, daß die nach innen gerichtete Fläche, die gegen die äußere Umfangskante des Ringes anliegt, auf der inneren Seite der äußeren Wand (58) in der Beschleunigungskammer (57) vorgesehen ist.

13. Zerstäuberrad nach Anspruch 11 oder 12, dadurch **gekennzeichnet**, daß die Auswurffläche des Verschleißringes (61) im wesentlichen von der zentralen Nabe (56) des Rades (55) zu dem nach innen gewandten Ende der Auswurfkanäle (59) verläuft.

14. Zerstäuberrad nach einem der Ansprüche 1 bis 10, dadurch **gekennzeichnet**, daß wenigstens in der Nähe der Auswurfkanäle (59) die Auswurffläche parallel zu einer Fläche verläuft, die die Achsen der Kanäle enthält.

15. Zerstäuberrad nach einem oder mehreren der Ansprüche 1 bis 11, dadurch **gekennzeichnet**, daß der durchschnittene Ring (22) eine Basis (32) aus einem korrosionsbeständigen Material, wie etwa nichtrostendem Stahl, und eine Verschleißschicht (33) umfaßt, die auf die Basis aufgebracht ist und die Auswurffläche bildet und aus einem besonders harten und verschleißfesten Material, wie Siliciumcarbid, Aluminiumoxid oder Wolframcarbid besteht.

## Revendications

1. Roue (1, 55) de pulvérisation, en particulier pour liquides abrasifs tels que des suspensions ou dispersions de matériaux abrasifs, dans un ensemble de séchage par pulvérisation, cette roue comportant un moyeu central (3, 56) pour la maintenir sur un axe rotatif (10) dans un pulvérisateur centrifuge (2) de l'ensemble de séchage par pulvérisation, une chambre d'accélération annulaire (4, 57) disposée autour du moyeu et comportant une ouverture supérieure (15, 62) de l'anneau à travers laquelle le liquide à pulvériser peut être introduit dans la chambre d'accélération (4, 57), une ou plusieurs faces d'éjection (7) pour faire passer dans la roue de pulvérisation le liquide vers l'extérieur, en direction de sa périphérie, ainsi que plusieurs canaux d'éjection (6, 59) qui sont répartis à une distance angulaire les uns des autres à la périphérie de la chambre d'accélération et s'étendent transversalement à travers la paroi extérieure (5, 58) de la chambre pour éjecter le liquide hors de la chambre d'accélération (4, 57) lorsque la roue de pulvérisation (1, 55) tourne, au moins une des faces d'éjection (7) étant agencée sur un anneau de protection consommable (22, 61), en forme de plaque, disposé sur la roue de pulvérisation (1, 55) et réalisé en une céramique telle que le SiC ou le Al₂O₃, ou en un matériau similaire, dur et résistant à l'usure, caractérisée en ce que l'anneau de protection en forme de plaque (22, 61) est traversé par au moins une coupure (34, 66) essentiellement transversale à la direction périphérique de l'anneau.

2. Roue selon la revendication 1, caractérisée en ce que l'anneau de protection (22, 61) est divisé en plusieurs éléments de protection (23, 65) par des coupures (34, 66) s'étendant de la périphérie de l'anneau (22, 61) en une direction essentiellement orientée vers un même point sur l'axe de rotation ou vers une région essentiellement circulaire entourant cet axe.

3. Roue selon la revendication 2, caractérisée en ce que l'extension radiale de chaque élément de protection (23) excède sa plus grande largeur.

4. Roue selon une des revendications 1 à 3, caractérisée en ce que la coupure, ou les coupures (34, 66) s'étendent en oblique vers l'avant dans la direction de la rotation, à partir de la face d'éjection de l'anneau (22, 61).

5. Roue selon une ou plusieurs des revendications 1 à 4, caractérisée en ce que la roue de pulvérisation (1, 55) possède une face d'appui (26) agissant contre la face arrière de l'anneau (22, 61) et une face (27, 28) orientée vers l'intérieur agissant contre l'arête périphérique extérieure de l'anneau (22, 61), afin de supporter l'anneau de protection (22, 61) durant la rotation de la roue de pulvérisation (1, 55).

6. Roue selon la revendication 5, caractérisée en ce que les éléments (23, 65) de l'anneau de protection (22, 61) sont lâchement maintenus dans la roue de pulvérisation (1, 55).

7. Roue selon une des revendications 5 ou 6, caractérisée en ce que les éléments (23) de l'anneau de protection (22) sont pressés en direction de la face d'appui (26) et/ou vers l'arête (27) dirigée vers l'intérieur par des moyens de fixation (37 - 41).

8. Roue selon une ou plusieurs des revendications 1 à 7, caractérisée en ce que le côté arrière de l'anneau de protection (22) traversé par des coupures comporte au moins une rainure radiale (30) coopérant avec une tige (31) ou une protubérance fixée dans la face d'appui (26) de la roue de pulvérisation (1) qui agit contre la face arrière.

9. Roue selon une ou plusieurs des revendications 1 à 8, caractérisée en ce qu'elle comporte un anneau de protection (22) orienté vers le bas et/ou vers l'intérieur agencé à l'extérieur de la chambre d'accélération (4) et ayant une face d'éjection (7) pour éjecter le liquide sous forme d'une nappe essentiellement cohérente hors des canaux d'éjection (6) et plus à l'extérieur, pour une pulvérisation à partir d'une arête d'évacuation périphérique (8) agencée sur la face d'éjection (7), cette dernière s'étendant vers l'intérieur à partir de l'arête d'évacuation (8) vers une région de la roue de pulvérisation (1) située au-dessus des embouchures des canaux d'éjection (6).

10. Roue selon la revendication 9, caractérisée en ce que la face orientée vers l'intérieur agissant contre l'arête périphérique extérieure de l'anneau est disposée sur un rebord (27) orienté vers l'intérieur qui coopère avec une encoche (28) annulaire essentiellement en forme de V ménagée dans l'arête périphérique extérieure de l'anneau de protection (22) et qui intersecte la face d'éjection le long de l'arête d'évacuation (8), elle-même située en-dessous et à distance de l'arête inférieure du rebord.

11. Roue selon une ou plusieurs des revendications 1 à 8, caractérisée en ce qu'elle comporte un anneau de protection (61) traversé par des coupures et agencé dans la chambre d'accélération (57) et ayant une face d'éjection orientée vers l'ouverture supérieure de l'anneau.

12. Roue selon la revendication 11, caractérisée en ce que la face orientée vers l'intérieur agissant contre l'arête périphérique extérieure de l'anneau est disposée sur le côté intérieur de la paroi extérieure (58) de la chambre d'accélération (57).

13. Roue selon une des revendications 11 ou 12, caractérisée en ce que la face d'éjection de l'anneau de protection (61) s'étend essentiellement depuis le moyeu central (56) de la roue (55) jusqu'à l'extrémité intérieure des canaux d'éjection (59).

14. Roue selon une ou plusieurs des revendications 1 à 10, caractérisée en ce qu'au moins au voisinage des canaux d'éjection (59) la face d'éjection s'étend parallèlement à une face contenant les axes de ces canaux.

15. Roue selon une ou plusieurs des revendications 1 à 11, caractérisée en ce que l'anneau de protection traversé par des coupures (22) est composé d'une base (32) en un matériau résistant à la corrosion tel l'acier inox, et d'une couche de protection (33) appliquée sur le substrat et formant la face d'éjection, cette couche consistant en un matériau particulièrement dur et résistant à l'usure, tel le carbide de silicone, le silice, ou le carbide de tungstène.
